## Europäisches Patentamt

(19) **European Patent Office**

**Office européen des brevets**

(11) Veröffentlichungsnummer: **0 011 592**
**B1**

(12) # EUROPÄISCHE PATENTSCHRIFT

(45) Veröffentlichungstag der Patentschrift:
**25.11.81**

(21) Anmeldenummer: **79730004.3**

(22) Anmeldetag: **12.11.79**

(51) Int. Cl.³: **B 03 B 9/06,** B 02 C 13/04,
B 65 G 69/02

(54) **Einrichtung zur Aufbereitung von Müll.**

(30) Priorität: **15.11.78 DE 2849509**

(43) Veröffentlichungstag der Anmeldung:
**28.05.80 Patentblatt 80/11**

(45) Bekanntmachung des Hinweises auf die Patenterteilung:
**25.11.81 Patentblatt 81/47**

(84) Benannte Vertragsstaaten:
**AT BE CH GB NL SE**

(56) Entgegenhaltungen:
**DE-A-2 517 487**
**FR-A-1 105 402**
**FR-A-2 160 528**
**FR-A-2 357 305**
**FR-E-2 395 783**
**US-A-3 970 547**

(73) Patentinhaber: **GMU-Gesellschaft für
Materialrückgewinnung und Umweltschutz m.b.H.,
Rüttenscheider Platz 10, D-4300 Essen (DE)**

(72) Erfinder: **Riemann, Hanns-Helmut, Ing. (grad.),
Schattbachstrasse 26, D-462/ Bochum (DE)**
Erfinder: **Skaletz, Heinz-Josef, Dipl.-Ing.,
Salentinstrasse 318, D-4350 Recklinghausen (DE)**
Erfinder: **Sonnenschein, Hans, Ing. (grad.), Hatzper
Bogen, D-4300 Essen (DE)**

(74) Vertreter: **Meissner, Walter, Dipl.-Ing. et al,
Patentanwälte Dipl.-Ing. Walter Meissner, Dipl.-Ing. Peter
E. Meissner, Dipl.-Ing. Hans Joachim Presting
Herbertstrasse 22, D-1000 Berlin 33 (DE)**

BUNDESDRUCKEREI BERLIN

Einrichtung zur Aufbereitung von Müll

Eine Einrichtung gemäß dem Oberbegriff des Patentanspruchs 1 ist aus der FR-E-2 395 783 bekannt. Als Zerkleinerungsvorrichtung wird bei dieser Einrichtung eine Messer- oder Schneidanordnung benutzt.

Bei einer anderen aus der Praxis bekannten Einrichtung entleert die mit der Hammerwalze versehene Zerkleinerungsmaschine den von ihr durchmischten und zerkleinerten Müll auf ein Förderband, das zu einem Schwingsieb führt. Erst das Schwingsieb zerlegt den Müll in Komponenten. Nun enthält vor allem Hausmüll einen großen Anteil an spezifisch leichtem, durch ein Schlagwerk schwer zerkleinerbaren Gut, wie z. B. Kunststoffolien. Diese Bestandteile verkleben oder verwickeln sich leicht mit den schweren Bestandteilen des Mülls und erschweren damit das Zerkleinerungsverfahren und das Siebverfahren, weil die Messerzwischenräume sich ebenso zusetzen wie die Sieböffnungen.

Die Erfindung bezweckt, eine Einrichtung der bezeichneten Art zu schaffen, bei der vor, während und nach der Zerkleinerung eine erste, von dem Sieb unabhängige Komponententrennung stattfindet.

Die Lösung dieser Aufgabe erfolgt mit den Merkmalen des kennzeichnenden Teils des Anspruchs 1.

Die Merkmale der Patentansprüche 2 bis 4 betreffen eine vorteilhafte Bauform der Zerkleinerungsvorrichtung, die sich aus der Unterbringung am Eingang der zusammenhängenden Trommel herleitet. Sie ist baulich einfach und funktionsgerecht.

Mit der Einrichtung gemäß dem gattungsbildenden Stand der Technik ließ sich die gestellte Aufgabe nicht lösen, weil sich die Zerkleinerungsvorrichtung über die gesamte Länge der Trommel erstreckt und damit die Komponententrennung erschwert.

Ein besonderer Vorteil der erfindungsgemäßen Einrichtung ist darin zu sehen, daß diese wegen der Kompaktbauart zu der Unterbringung auf ein Fahrzeug tendiert. Während Aufbereitungseinrichtungen bekannter Art stets aus einer Anzahl neben-hintereinander aufgestellter und durch Förderbänder miteinander verbundener Aggregate bestehen, eröffnet die erfindungsgemäße Einrichtung ein neues Verfahren in Zusammenhang mit der Aufbereitung von Müll etwa in Umschlaganlagen. Vorteilhaft ist der kleine Platzbedarf. Bei Umschlaganlagen oder ggf. bei Deponien, die nicht dauernd beliefert werden, ist es vorteilhaft, die verfahrbare Einrichtung wechselnd von einer zu einer anderen Anlage zu bringen. Dies spart Investitionen und führt zu einer verhältnismäßig hohen Jahresbenutzungsstundenzahl der Einrichtung.

In der Zeichnung ist die Erfindung an einem Ausführungsbeispiel dargestellt. Die im weiteren erläuterte Zeichnung zeigt mit

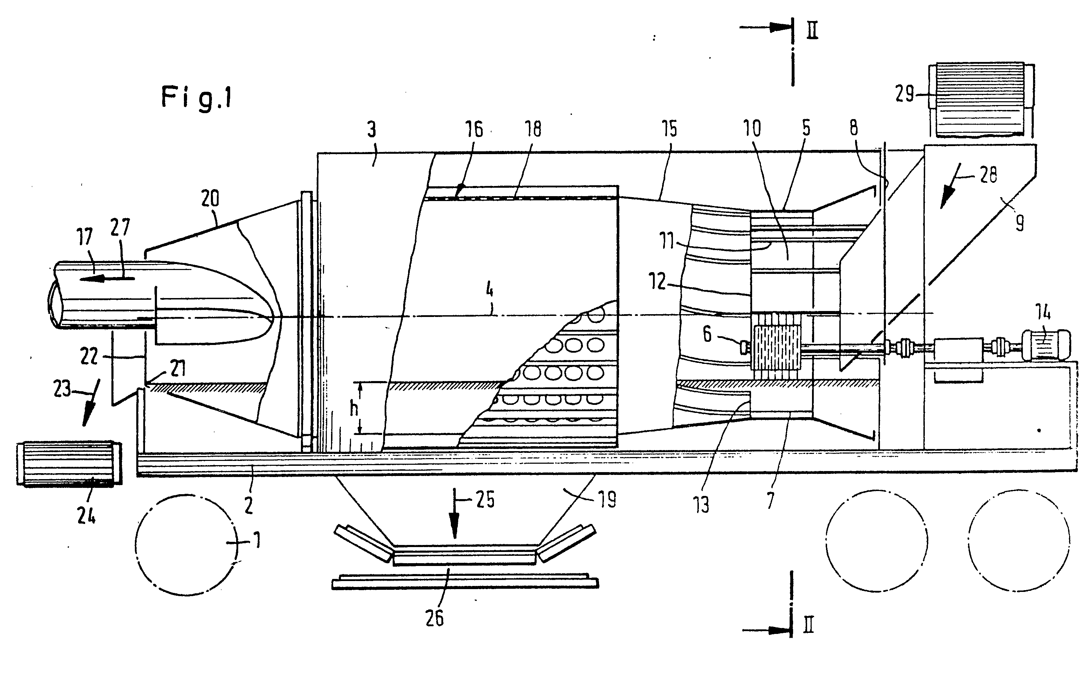

Fig. 1 schematisch im Längsschnitt eine auf einem Fahrgestell angeordnete Einrichtung zur Aufbereitung von Müll, mit Zerkleinerungsmaschine und Sieb- und Sichtvorrichtung in zusammenhängender Drehtrommel,

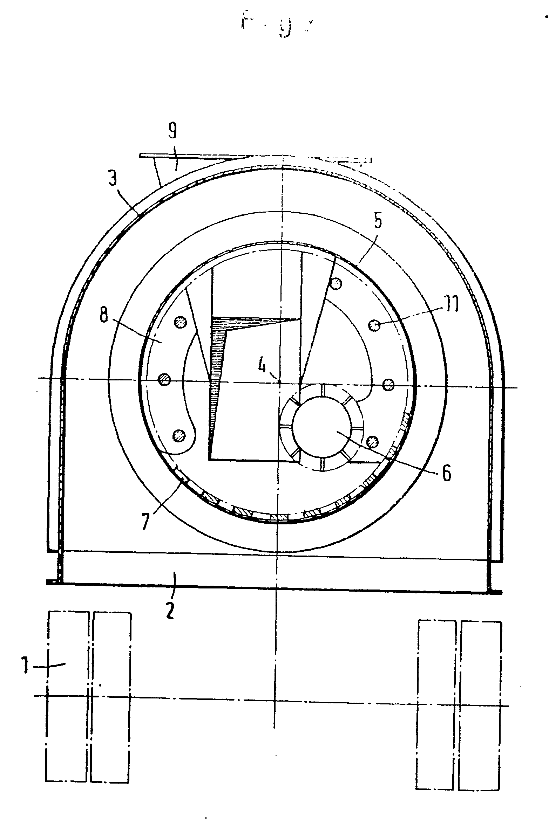

Fig. 2 die Einrichtung nach Fig. 1 entsprechend Schnittlinie II-II.

Ein auf einem Fahrgestell 1 angeordneter Rahmen 2 trägt ein Gehäuse 3, das die Größe und die Kontur des bei Mülltransportwagen geläufigen Fahrzeugaufbaus hat. In dem Gehäuse 3 befindet sich eingabeseitig zunächst eine um die horizontale Achse 4 drehbare Trommel 5. Der Trommelantrieb ist nicht gezeichnet.

Die Trommel 5 ist Gehäusemantel einer Zerkleinerungsmaschine deren Hauptbestandteil eine seitliche unterhalb der Achse 4 gelagerte Hammerwalze 6 ist. Die Hammerwalze 6 und eine gerippte Panzerauskleidung 7 der Trommel 5 sind als Müllzerkleinerungseinrichtung bekannt. Ein kreisbogenförmiger, unten offener Rahmen 8 trägt auf der einen Seite einen Eingangstrichter 9. Die andere Seite des Rahmens 8 ist als Zerkleinerungskammer 10 ausgebildet, d. h. der Rahmen 8 trägt über eine Anzahl konsolartig auskragender Bolzen 11 eine kreisförmige Trennwand 12. Der untere Bereich dieser Trennwand 12 ist zu einer Austragsöffnung 13 ausgespart. Die Zerkleinerungskammer 10 ist länger als die Hammerwalze 6. Diese liegt in der Nähe der Austragsöffnung 13 und ist in der Trennwand 12 gelagert. Die antriebsseitige Lagerung der Hammerwalze 6 und deren Antrieb 14 ist an dem Rahmen 8 befestigt.

Diese in Zusammenhang mit der Hammerwalze 6 beschriebenen Teile bilden eine Baueinheit, die in geeigneter Weise aus der Trommel 5 herausgezogen oder herausgeschwenkt werden kann.

Die Trommel 5 setzt sich in Baueinheiten zu einer Auflockerungstrommel 15 fort. 5 und 15 bilden eine Gesamttrommel 16, an deren Austrittsende ein Saugkopf 17 angeordnet ist. Der Saugkopf 17 gehört zu einem über einen Zyklon angeschlossenes Gebläse. Der hintere Bereich der Auflockerungstrommel 15 ist als Trommelsieb 18 ausgebildet. Das Gehäuse 3 ist an jener Stelle mit einer Ausfallschurre 19 versehen. An das Ende der Auflockerungstrommel 15, das identisch mit dem Ende des Trommelsiebes 18 ist, schließt sich fest ein sich verengender Auslauftrichter 20 an. Der untere Rand 21 des Auslauftrichters 20 bewirkt für den Müll eine Mindestschütthöhe h in dem Trommelsieb 18. Die Trichteraußenseite 22 ist, soweit sie nicht durch den Saugkopf 17 ausgefüllt wird, etwa durch nichtgezeichnete Vorhangschürzen gegen Falschlufteintritt gesichert.

Während des Betriebes der Einrichtung steht diese über den Saugkopf 17 insgesamt unter einem schwachen Unterdruck. Hierdurch tritt ein erster Frischluftanteil durch den Eingangstrichter 9. Dieser Frischluftanteil durchströmt die Zerkleinerungsmaschine und nimmt Papierteile oder dergleichen, soweit sie leicht flugfähig sind, schon vor der Berührung mit der Hammerwalze 6 mit auf den Weg zum Saugkopf 17. Andere leichte Bestandteile des Mülls trennen sich während des Zerkleinerns von den schwereren Bestandteilen und werden teilweise durch den Luftstrom erfaßt. Die übrigen leichten Bestandteile des Mülls gelangen mit dem zerkleinerten Gut in die Auflockerungstrommel 15. Über an den Innenwänden der Auflockerungstrommel 15 angeordnete Mitnehmerleisten wird das Gut angehoben, fällt unter ständig fortschreitender Auflockerung herunter. Dabei kommen die leichten Bestandteile in einen Schwebezustand, in welchem sie wegen der starken hindurchziehenden Luftströmung verbleiben und zu dem Saugkopf 17 gelangen. Dieser Vorgang erstreckt sich über die ganze Länge der Auflockerungstrommel 15, obwohl im größeren Teil dieser Länge das zerkleinerte Gut bereits ausgesiebt wird. Der nichtsiebbare Rückstand des Mülls gelangt dann über den unteren Rand 21 entsprechend Pfeilrichtung 23 nach außen. Der Pfeil 23 bezeichnet damit den grobstückigen Müll, wie z. B. Metallstücke oder Steine. Diese Komponente gelangt auf ein in Fig. 3 angedeutetes Förderband 24. Die entsprechende Pfeilrichtung 25 ausgesiebte kleinkörnige Komponente gelangt auf ein Förderband 26. Die in beschriebener Weise zustande gekommene Komponente entsprechend der Pfeilrichtung 27 der leichteren Bestandteile des Mülls wandert über den Saugkopf 17 ab. 28 ist der über das Förderband 29 eingebrachte Gesamtmüll.

## Patentansprüche

1. Einrichtung zur Aufbereitung von Müll, mit einer in einer drehbaren, gleichzeitig als Siebvorrichtung ausgebildeten Trommel (5, 15, 16) angeordneten Zerkleinerungsvorrichtung (6), bei der am Austrittsende der Trommel (16) ein Saugkopf (17) derart angeordnet ist, daß die Einrichtung in ganzer Länge unter einem die leichteren Bestandteile des Mülls in den Flugzustand versetzenden Unterdruck steht, dadurch gekennzeichnet, daß als Zerkleinerungsvorrichtung eine Hammerwalze (6) vorgesehen und die die Hammerwalze aufnehmende Trommel (5) zu einer Auflockerungstrommel (15) verlängert ist.

2. Einrichtung nach Anspruch 1, dadurch gekennzeichnet, daß die Hammerwalze (6) zusammen mit dem Eingabetrichter (9) der Einrichtung eine aus der Trommel (5) herausziehbare Baueinheit bildet.

3. Einrichtung nach Anspruch 2, dadurch gekennzeichnet, daß die Baueinheit einen kreisbogenförmigen, unten offenen Rahmen (8) besitzt, an dessen einen Seite der Eingabetrichter (9) und der Hammerwalzenantrieb (14) an an dessen anderen Seite in einem eine Zerkleinerungskammer (10) abteilenden Abstand eine kreisförmige Trennwand (12) befestigt ist, deren unterer Bereich zu einer Austragsöffnung (13) ausgespart ist.

4. Einrichtung nach Anspruch 3, dadurch gekennzeichnet, daß die Zerkleinerungskammer (10) länger als die Hammerwalze (6) ist und die Hammerwalze in der Nähe der Austragsöffnung (13) angeordnet ist.

## Claims

1 Apparatus for the treatment of refuse with a crushing unit (6) located in a rotary drum (5, 15, 16) which at the same time serves as a screening device, a suction head (17) being arranged at the discharge end of drum (16) in such a way that the entire length of the apparatus is under a vacuum which brings the lighter fractions of the refuse into the flying state, characterized in that the crushing unit is constituted by a hammer roller (6) and the drum (5) receiving the hammer roller is extended to a loosening or aerating drum (15).

2. Apparatus according to claim 1, characterized in that the hammer roller (6) together with the feed hopper (9) of the apparatus form a constructional unit which can be removed from drum (5).

3. Apparatus according to claim 2, characterized in that the structural unit has a circular frame (8), which is open at the bottom and to whose one side is fixed the feed hopper (9) and hammer roller drive (14) and to whose other side is fixed a circular partition (12) in a spacing partitioning a crushing chamber (10), the lower area of partition (12) being hollowed out to form a discharge opening (13).

4. Apparatus according to claim 3, characterized in that the crushing chamber (10) is longer than the hammer roller (6) and the hammer roller is arranged in the vicinity of the discharge opening (13).

## Revendications

1. Installation pour le traitement d'ordures, comportant un appareil de fragmentation (6) disposé dans un tambour tournant (5, 15, 16) constituant simultanément un appareil de tamisage, dans laquelle, à l'extrémité de sortie du tambour (16), une tête d'aspiration (17) est disposée de telle sorte que l'installation, sur toute sa longueur, est soumise à une dépression qui amène à l'état volant les constituants les plus légers des ordures, caractérisée par le fait que l'appareil de fragmentation prévue est un cylindre à marteaux (6) et que le tambour (5) logeant le cylindre à marteaux est prolongé en un tambour d'ameublissement (15).

2. Installation selon la revendication 1, caractérisée par le fait que le cylindre à marteaux (6) forme, avec la trémis d'alimentation (9) de l'installation, un ensemble pouvant être retiré du tambour (5).

3. Installation selon la revendication 2, caractérisé par le fait que l'ensemble présente un châssis en arc de cercle (8) ouvert en bas, à un côté duquel sont fixés la trémie d'alimentation (9) et l'entraînement du cylindre à marteaux (14) et à l'autre côté duquel est fixée, à une distance qui délimite une chambre de fragmentation (10), une cloison circulaire (12) dont la région inférieure est échancrée en une ouverture d'extraction (13).

4. Installation selon la revendication 3, caractérisé par le fait que la chambre de fragmentation (10) est plus longue que le cylindre à marteaux (6) et le cylindre à marteaux est disposé roche à l'ouverture d'extraction (13).

Fig.1

0 011 592

Fig 2